# EUROPÄISCHE PATENTANMELDUNG

(11) **EP 1 295 822 A1**
(43) Veröffentlichungstag der Anmeldung: **26.03.2003**
(21) Anmeldenummer: 01122763.4
(22) Anmeldetag: 21.09.2001
(51) Int. Cl.: B65G 53/20, B65G 53/52

(54) **Pneumatische Fördervorrichtung und -verfahren**

(71) Anmelder: BMH Claudius Peters GmbH, 21614 Buxtehude (DE)
(72) Erfinder: Hilgraf, Peter, 22149 Hamburg (DE)
(74) Vertreter: Glawe, Delfs, Moll & Partner

(57) **Zusammenfassung**

Die Erfindung betrifft eine Vorrichtung zum pneumatischen Fördern von Schüttgut mit einem Förderrohr (3), das einen Förderpfad (33) für das Schüttgut (6) definiert, und einer Treibgasquelle (1), die an das Förderrohr (3) angeschlossen ist und zum Zuführen von Treibgas in Richtung des Förderpfads (33) ausgebildet ist, wobei das Förderrohr (3) abschnittsweise ein fluidisierendes Rohrsegment (4) aufweist. Mittels des fluidisierenden Rohrsegments (4) kann in kritischen Abschnitten des Förderrohrs, insbesondere im Bereich einer Schüttgutaufgabeeinrichtung (5) oder vor Umlenkstellen (39), das dort häufig in hoher Konzentration anzutreffende Schüttgut (6) fluidisiert werden, wodurch es dann reibungsarm mit verhältnismäßig geringen Gasgeschwindigkeiten weiter befördert werden kann. Die Erfindung bezieht sich ferner auf ein entsprechendes Förderverfahren.

## Beschreibung

Die Erfindung betrifft eine Vorrichtung zum pneumatischen Fördern von Schüttgut mit einem Förderrohr, das einen beliebigen Förderpfad für das Schüttgut definiert, und einer Treibgasquelle, die an das Förderrohr angeschlossen und zum Zuführen von Treibgas in Richtung des Förderpfads ausgebildet ist, sowie ein entsprechendes Verfahren.

Zur Förderung von körnigem oder staubförmigem Gut (Schüttgut) sind aus offenkundiger Vorbenutzung pneumatische Fördervorrichtungen bekannt. An einer Aufgabestelle wird das zu fördernde Schüttgut der Fördervorrichtung zugeführt, von der es dann mittels eines Gasstroms in einer Förderrohrleitung zu einer Austragstelle transportiert wird. Dieser Gasstrom (Treibgas) kann durch Sog oder durch Druck erzeugt werden; man spricht entweder von einer Saug- oder einer pneumatischen Druckfördervorrichtung. Diese pneumatischen Fördervorrichtungen erlauben es, das Schüttgut auf nahezu beliebigem Weg von der Aufgabe- zur Abgabestelle zu transportieren. Dabei können beträchtliche Höhenunterschiede überwunden werden, insbesondere kann die Abgabestelle auch höher liegen als die Aufgabestelle für das Schüttgut. Schwierigkeiten treten bei den pneumatischen Fördervorrichtungen insbesondere an solchen Stellen auf, an denen das zu fördernde Schüttgut in hoher Konzentration auftritt, beispielsweise an der Aufgabestelle. Um diese örtlich erhöhte Schüttgutmenge in den Treibgasstrom aufnehmen zu können, muß das Treibgas eine beträchtliche Mindestgasgeschwindigkeit aufweisen. Die Bereitstellung des Treibgasstroms mit entsprechend hoher Geschwindigkeit ist aufwendig, und zwar sowohl unter baulichen Aspekten, insbesondere hinsichtlich der Größe des erforderlichen Druckerzeugers und Filters, wie auch unter Kostenaspekten, insbesondere hinsichtlich des erforderlichen Energieaufwands.

Es ist eine andere Art von pneumatischen Fördervorrichtungen bekannt, die mit verhältnismäßig kleinen Gasströmen und damit auch klein dimensionierten Gebläsen auskommen. Bei diesen Fördervorrichtungen handelt es sich um sogenannte pneumatische Förderrinnen. Diese auch als "air-slides" bezeichneten Förderrinnen weisen einen porösen Boden auf, durch den Gebläseluft oder Gas zugeführt wird. Dadurch wird entlang der Förderstrecke das pulverige oder feinkörnige Schüttgut in einen fließfähigen Zustand gebracht. Um das so fluidisierte Schüttgut zu transportieren, muß die pneumatische Förderrinne geneigt angeordnet sein. Als antreibende Kraft wirkt dabei die Schwerkraft, so daß das fluidisierte Schüttgut der Neigung folgend abwärts fließt. Der Gasbedarf der pneumatischen Förderrinnen ist gering, da es lediglich zur Fluidisierung und nicht zum Antrieb verwendet wird. Dem steht aber der schwerwiegende Nachteil gegenüber, daß das Schüttgut nicht in beliebiger Richtung, sondern stets nur abwärts befördert werden kann.

Ausgehend von den obengenannten pneumatischen Fördervorrichtungen stellt sich der Erfindung die Aufgabe, bei Beibehaltung der beliebigen Führung des Förderpfads den Gasverbrauch der Fördervorrichtung zu senken.

Die erfindungsgemäße Lösung besteht in einer Vorrichtung mit den Merkmalen des Anspruchs 1 und einem Verfahren mit den Merkmalen des Anspruchs 8. Vorteilhafte Weiterbildungen ergeben sich aus den Unteransprüchen.

Erfindungsgemäß ist bei einer Vorrichtung zum pneumatischen Fördern von Schüttgut mit einem Förderrohr, das einen Förderpfad für das Schüttgut definiert, und einer Treibgasquelle, die an das Förderrohr angeschlossen und zum Zuführen von Treibgas in Richtung des Förderpfads ausgebildet ist, vorgesehen, daß das Förderrohr abschnittsweise ein fluidisierendes Rohrsegment aufweist.

Nachfolgend seien zuerst einige Begriffe erläutert:

Unter Schüttgut wird kleinstückiges Gut, insbesondere in staubartiger oder körniger Form verstanden.

Unter einem Förderrohr wird eine rundum geschlossene Leitung verstanden, entlang deren Mittelachse Fördergut transportiert werden kann. Häufig weist es eine runde Gestalt auf, jedoch ist das nicht unbedingt erforderlich; es kann auch von anderer Gestalt sein, bspw. viereckig. Das Förderrohr kann aus geraden oder aus gekrümmten Abschnitten bestehen, ferner können Abzweigstellen vorgesehen sein.

Unter einem Förderpfad wird ein durch die Anordnung der Förderrohre vorbestimmter Weg verstanden, entlang dem das Fördergut durch die Förderrohre transportiert wird. Der Förderpfad weist eine Richtung auf; seine Richtung ist diejenige des Förderguts im Normalbetrieb der Fördervorrichtung. So ist eine Aufgabestelle für das Schüttgut vorne am Förderpfad und eine Abgabestelle hinten am Förderpfad angeordnet.

Als Treibgas wird das Gas verstanden, das am Anfang des Förderpfads in das Förderrohr eingeleitet wird und in Axialrichtung des Förderrohrs strömt und dazu dient, eine antreibende Kraft auf das zu fördernde Schüttgut auszuüben.

Unter abschnittsweise wird verstanden, daß zumindest ein, wenn auch kleiner, Abschnitt begrenzter Länge mit einem Belüftungsboden und mindestens ein weiterer Abschnitt vorhanden ist, in dem kein Belüftungsboden vorhanden ist.

Unter Fluidisiergas wird solches Gas verstanden, das dem Förderrohr quer zum Förderweg zugegeben wird und zum Verflüssigen (Fluidisieren) des zu fördernden Schüttguts dient.

Mit den erfindungsgemäßen fluidisierenden Rohrsegmenten wird erreicht, daß das Schüttgut leichter, d. h. mit weniger Treibgas gefördert werden kann. Mit dem zugeführten Fluidisiergas wird eine Wirbelschicht in dem zu fördernden Gut erzeugt. Dank der Wirbelschicht verhält sich das Schüttgut flüssigkeitsähnlich, man spricht deshalb davon, daß es fluidisiert ist. Durch die Fluidisierung nimmt die innere Reibung des Schüttguts stark ab, d. h. der Reibungswinkel läuft gegen Null. Als Folge davon ist zum Aufnehmen und Bewegen des Schüttguts in Förderrichtung nur eine verhältnismäßig geringe Geschwindigkeit des Treibgases ausreichend. Sie ist wesentlich geringer als diejenige Mindestgasgeschwindigkeit, die herkömmlicherweise bei pneumatischen Fördervorrichtungen ohne Erzeugung einer Wirbelschicht erforderlich wäre. Das bringt den Vorteil mit sich, daß sowohl bei Saug- wie auch bei Druckförderung der gesamte Gasbedarf geringer ist als bei einer herkömmlichen, aus dem Stand der Technik bekannten Rohr-Fördervorrichtung. Dadurch können die Gasversorgungs- und -entsorgungskomponenten der Fördervorrichtung kleiner dimensioniert werden, mit entsprechend geringerem Aufwand bei Herstellung und Betrieb.

Die Erfindung hat erkannt, daß mit der erfindungsgemäßen Vorrichtung die Vorteile der herkömmlichen pneumatischen Rohrfördereinrichtung hinsichtlich beliebiger Wahl des Förderwegs einschließlich Steigungen mit den denjenigen der pneumatischen Förderrinnen hinsichtlich geringerem Gasverbrauch kombiniert werden können.

Darüber hinaus hat die erfindungsgemäße Fördervorrichtung den Vorteil, daß dank der Fluidisation und daraus resultierenden geringeren Mindestgasgeschwindigkeit nur geringere Druckdifferenzen entlang des ganzen Förderwegs erforderlich sind. Diese geringeren Druckdifferenzen sind nicht nur mit weniger Aufwand zu erzeugen, sondern ermöglichen auch einen stabileren Betrieb. Die erfindungsgemäß geringen Druckdifferenzen erlauben eine niedrigere Mindestgeschwindigkeit, wodurch sich die Sicherheitsmarge zwischen der Fördergeschwindigkeit und der Mindestgeschwindigkeit erhöht. Bei hohen Druckdifferenzen entlang des Förderwegs ist eine hohe Mindestgeschwindigkeit erforderlich. Sie bringt ein erhöhtes Risiko, daß es zu Druckschwingungen (Pulsationen) kommt, welche zu Beeinträchtigungen der Betriebssicherheit bis hin zu Schäden an der Fördervorrichtung führen können.

Die Erfindung hat ferner erkannt, daß mit der abschnittsweisen, also nicht durchgängigen, Anordnung der fluidisierenden Rohrsegemente sowohl der Herstellungs- und Betriebsaufwand wie auch die Betriebssicherheit gegenüber einer durchgängigen Fluidisierung wie bei den pneumatischen Förderrinnen verringert werden kann. Würden die fluidisierenden Rohrsegmente durchgängig angeordnet, wäre der Verbrauch an Fluidisiergas wesentlich erhöht, wodurch der Aufwand erhöht würde.

Mit einer lediglich abschnittsweisen Anordnung der fluidisierenden Rohrsegmente kann der Druckverlust gezielt in solchen Bereichen verringert werden, in denen das Schüttgut mit einer hohen Konzentration auftritt. Daraus würde an und für sich ein höherer Strömungswiderstand und damit ein höherer Druckverlust in diesem Bereich resultieren. Vermittels des fluidisierenden Rohrsegments wird aber dank der Fluidisierung die innere Reibung des Schüttguts in diesem Bereich herabgesetzt. Dem Ansteigen des Strömungswiderstands und des Druckverlusts wird damit entgegengewirkt. Dadurch werden die Druckverlust-Unterschiede entlang des Förderpfads minimiert. Bei einer durchgängigen Anordnung der fluidisierenden Rohrsegmente hingegen würde der Druckverlust auch in solchen Bereichen des Förderpfads vermindert, in denen das Schüttgut nicht in hoher Konzentration auftritt, wo also der Druckverlust ohnehin schon niedrig war; die Druckverlust-Unterschiede würden dadurch wieder ansteigen. Der Gefahr von Betriebsstörungen aufgrund von Pulsationen, wie sie durch sprunghafte Widerstandsänderungen, die zu einer Bildung von Pfropfen oder einer Entmischung von Schüttgut und Gasstrom führen können, wird entgegengewirkt. Besonders zweckmäßig ist es daher, die erfindungsgemäßen fluidisierenden Rohrsegmente in gefährdeten Abschnitten anzuordnen, in denen das Schüttgut in hoher Konzentration auftreten kann. Das betrifft insbesondere den Bereich einer Schüttgutaufgabe oder auch gewisse Bereiche von langen geraden Strecken.

Bei einer vorteilhaften Ausführungsform weist das fluidisierende Rohrsegment einen Belüftungsboden mit einer Fluidisiergaszuführung auf. Damit läßt sich eine Fluidisierung des Schüttguts auf konstruktiv einfache Weise erreichen. Vorzugsweise schließt sich der Belüftungsboden an seiner rohrinneren Seite bündig an die innere Oberfläche der Rohrwandung an, so daß auch in dem fluidisierenden Rohrsegment der volle Querschnitt des Förderrohrs für das Schüttgut zur Verfügung steht.

Vorteilhafterweise ist ein fluidisierendes Rohrsegment im Bereich einer Schüttgutaufgabeeinrichtung vorgesehen. Augrund der Zuführung des Schüttguts tritt das Schüttgut in diesem Bereich in einer besonders hohen Konzentration auf. Die zur Aufnahme des Schüttguts in den Gasstrom erforderliche Mindestgeschwindigkeit des Gases kann mit dem erfindungsgemäßen Förderrohr deutlich vermindert werden. Dank der Erfindung ist es sogar ermöglicht, das Förderrohr in diesem Abschnitt horizontal oder aufwärts geneigt anzuordnen. Anders als bei den aus dem Stand der Technik bekannten pneumatischen Förderrinnen, die stets abwärts geneigt angeordnet sein müssen, um das Schüttgut am Fließen zu halten, kann bei der erfindungsgemäßen Fördervorrichtung die Schüttgutaufgabeeinrichtung in einem horizontal oder sogar aufwärts geneigten Abschnitt angeordnet sein. Dies ermöglicht eine wesentlich freiere Gestaltung bei der Wahl des Förderwegs entlang dem das Schüttgut von der Fördervorrichtung transportiert wird.

Zweckmäßigerweise sind die Längsabmessungen des Belüftungsbodens so gewählt, daß sie sich um eine bestimmte Nachlaufstrecke hinter die Zuführung der Schüttgutaufgabeeinrichtung erstreckt. Hierdurch wird der Tatsache Rechnung getragen, daß der aus der Zuführung der Schüttgutaufgabeeinrichtung austretende Schüttgut-Strahl häufig von dem in dem Förderrohr strömendem Teibgas in Förderrichtung hin vertrieben und aufgefächert wird. Durch die Nachlaufstrecke des Belüftungsbodens wird erreicht, daß auch der Teil des Schüttgut-Strahls, der in Förderrichtung vertrieben wird, noch in dem fluidisierenden Rohrsegment auftrifft und damit leicht in den Treibgasstrom aufgenommen werden kann.

Vorzugsweise sind mehrere Schüttgutaufgabeeinrichtungen in einem solchen Abstand angeordnet, daß benachbarte fluidisierende Rohrsegmente aneinandergrenzen. Dadurch ergibt sich über den Bereich der mehreren Schüttgutaufgabeeinrichtungen hinweg ein durchlaufendes fluidisierendes Rohrsegment. Dadurch wird sichergestellt, daß das aufgebrachte Schüttgut auf die fluidisierenden Rohrsegmente fällt und von diesen leicht in den Treibgasstrom aufgenommen werden kann. Dadurch wird der Gefahr von Verstopfungen vorgebeugt.

Bei einer vorteilhaften Ausführungsform ist ein fluidisierendes Rohrsegment an einer Pfropfstelle angeordnet. Unter einer Pfropfstelle wird eine solche Stelle verstanden, an der sich im Betrieb ohne die erfindungsgemäße Anordnung des fluidisierenden Rohrsegments Schüttgutverdichtungen oder -ablagerungen bilden. Solche Verdichtungen von Schüttgut entstehen insbesondere leicht in langen geraden Rohrstrecken ohne Richtungsänderung oder in den Bereichen nach einer Querschnittserweiterung bzw. einem Umlenkungselement, wie bspw. einem Krümmer. Durch fehlende Turbulenzen des Treibgasstroms können sich da teilweise ruhende oder unregelmäßig laufende Strähnen von Schüttgut ausbilden, die mit der Zeit anwachsen. Wenn diese Strähnen eine kritische Größe (etwa den halben Rohrquerschnitt) erreichen, kommt es beim Zusammenschieben dieser Strähnen zu einer schlagartigen Pfropfenbildung. Die Pfropfen können zum Verstopfen der Leitung führen oder aber zu starken (Druck-)Schlägen in dem Förderrohr, besonders wenn die Pfropfen auf nachfolgende Engstellen oder Krümmer auflaufen. Durch den Einsatz der erfindungsgemäßen fluidisierenden Rohrsegmente in bestimmten Abständen an solchen geraden Rohrstrecken kann die unerwünschte Anhäufung von Schüttgut in Form von Strähnen verhindert werden.

Dazu ist zweckmäßigerweise das fluidisierende Rohrsegment beabstandet von einem Umlenkelement oder einer Erweiterung des Förderrohrs angeordnet. Das ist insbesondere bei langen horizontalen Strecken zweckmäßig, um eine Pfropfenbildung wie oben erläutert entgegenzuwirken.

Die Erfindung erstreckt sich auch auf ein entsprechendes Verfahren zum pneumatischen Fördern von Schüttgut in einem Förderrohr entlang eines Förderpfads, mit den Schritten Zuführen von Treibgas in das Förderrohr, so daß ein längs des Förderpfads strömender Treibgasstrom entsteht, Aufgeben von Schüttgut in den Treibgasstrom im Förderrohr und abschnittsweises Zuführen von Fluidisiergas quer zum Förderpfad in das Förderrohr derart, daß das Schüttgut fluidisiert wird.

Die Erfindung wird nachfolgend unter Bezugnahme auf die beigefügte Zeichnung beschrieben, in der ein vorteilhaftes Ausführungsbeispiel der Erfindung dargestellt ist. Es zeigen:
- Fig. 1: eine schematische Darstellung einer erfindungsgemäßen Vorrichtung;
- Fig. 2: Querschnittsdarstellungen durch ein Förderrohr der erfindungsgemäßen Fördervorrichtung an zwei verschiedenen Stellen; und
- Fig. 3: eine schematische Darstellung eines anderen Abschnitts der erfindungsgemäßen Fördervorrichtung.

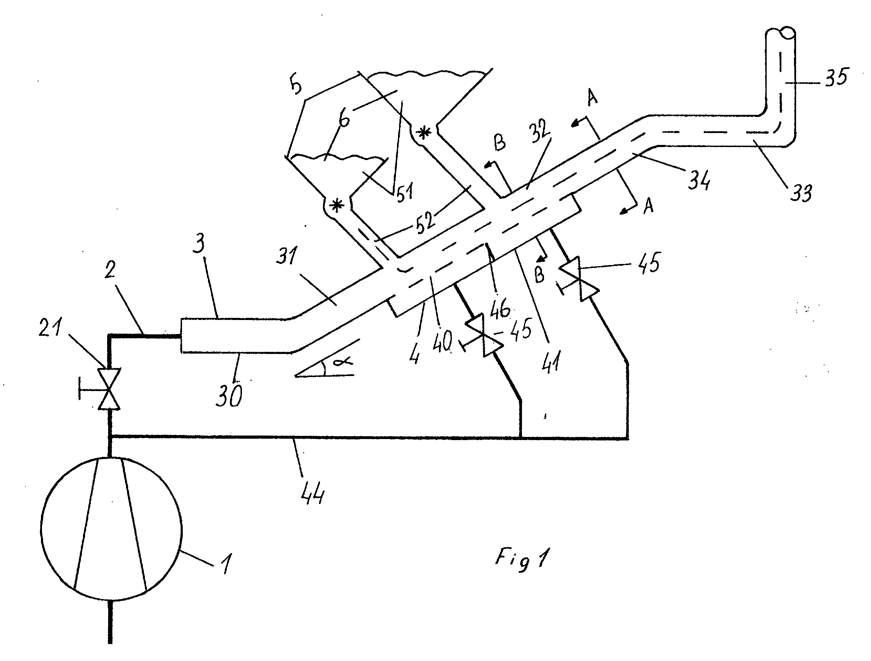

In dem Ausführungsbeispiel gemäß Fig. 1 ist eine pneumatische Fördervorrichtung dargestellt. Sie besteht aus einem langgestreckten Förderrohr 3, an dessen Anfang eine Zufuhrleitung 2 angeschlossen ist, durch die von einem Gebläse 1 Treibgas in das Förderrohr 3 geblasen wird. Zur Regulierung der Treibgaszufuhr ist in der Zufuhrleitung 2 ein Einstellventil 21 angeordnet.

Das Förderrohr 3, von dem nur ein Teil dargestellt ist, weist mehrere Abschnitte 30 bis 35 auf. In seinem ersten Abschnitt 30 verläuft es horizontal, während die Abschnitte 31 bis 34 um einen Elevationswinkel α aufwärts geneigt verlaufen. An dem Abschnitt 34 schließt sich ein senkrecht nach oben verlaufender Abschnitt 35 an; der weitere Verlauf des Förderrohrs 3 ist nicht dargestellt. Der Förderpfad ist mit dem Bezugszeichen 33 versehen.

Für die Zufuhr des Schüttguts sind zwei Schüttgutaufgabeeinrichtungen 5 vorgesehen. Bei ihnen kann es sich um Behälter handeln, die an ihrem unteren Ende 51 trichterartig ausgeformt sind. An der Spitze dieser trichterartigen Ausformung 51 schließt sich eine kurze Zuleitung 52 an, die an der Oberseite des Förderrohrs 3 in dem Abschnitt 32 mündet. Mit dieser Schüttgutaufgabeeinrichtung 5 kann Schüttgut 6 in das Förderrohr 3 der Fördervorrichtung eingebracht werden.

Das Förderrohr 3 ist in dem Abschnitt 32 als fluidisierendes Rohrsegment 4 ausgestaltet. Dazu ist das Förderrohr 3 in dem Abschnitt 32 in seinem unteren Umfangsbereich siebartig ausgestaltet, um so eine Belüftungsfläche 40 zu bilden. Die Belüftungsfläche 40 ist nach außen hin von einer Außenwand 41 umgeben, die eine zu der Belüftungsfläche 40 kongruente, im Querschnitt kreisbogenartige Gestalt aufweist. Zwischen der Belüftungsfläche 40 und der Außenwand 41 ist ein trogartiger Raum 42 gebildet, dem Fluidisiergas über einen Zufuhranschluß 43 zugeführt wird und aus dem es durch die Belüftungsfläche 40 hindurch in das Förderrohr 3 eintritt. An den Zufuhranschluß 43 ist ein Ende einer Zufuhrleitung 44 über ein Stellventil 45 angeschlossen. An dem anderen Ende der Zufuhrleitung 44 ist eine Fluidisiergasquelle angeschlossen. In dem dargestellten Ausführungsbeispiel ist keine eigene Fluidisiergasquelle vorgesehen, sondern die Zufuhrleitung 44 ist an den Auslaß des Gebläses 1 für das Treibgas angeschlossen. Dadurch daß dieselbe Gasquelle für das Treibgas und das Fluidisiergas verwendet wird, kann der konstruktive Aufwand für die erfindungsgemäße Fördervorrichtung weiter vermindert werden.

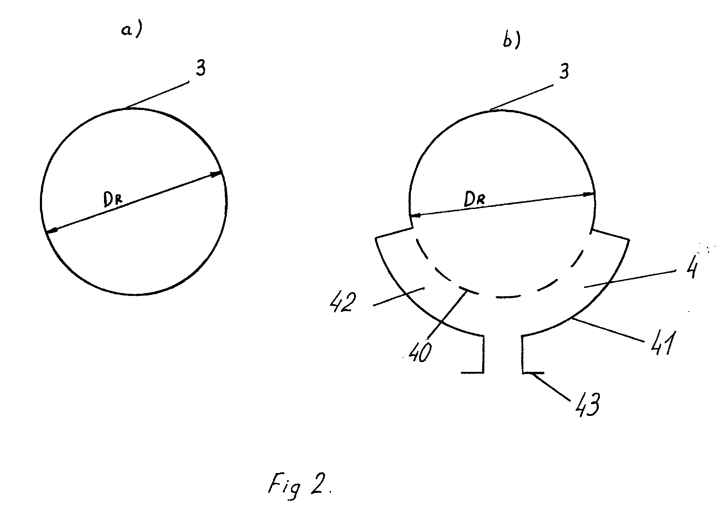

In Fig. 2a ist ein Querschnitt des Förderrohrs an der Stelle A-A dargestellt. Das Förderrohr 3 ist in kreisrunder Gestalt und weist einen Innendurchmesser D_{R} auf. Dieser Querschnitt des Förderrohrs 3 steht beispielhaft für alle die Abschnitte, in denen das Förderrohr 3 nicht als fluidisierendes Segment 4 ausgeführt ist. Es versteht sich, daß der Durchmesser des Förderrohrs nicht entlang des ganzen Förderpfads gleich sein muß. Er kann variieren, insbesondere in Förderrichtung stufenweise erweitert sein. In Fig. 2b ist ein Querschnitt des Förderrohrs 3 an der Stelle B-B dargestellt. Der innere Durchmesser des Förderrohrs 3 beträgt wiederum D_{R}, jedoch weist das Förderrohr in seinem unteren Umfangsbereich keine durchgängige Wandung, sondern die siebartige Belüftungsfläche 40 auf. Die siebartige Belüftungsfläche 40 ist dabei kreisbogenförmig gebogen und führt die kreisrunde Form des Förderrohrs 3 in diesem Bereich fort. Unter der Belüftungsfläche 40 ist eine äußere Wandung 41 angeordnet, die die Belüftungsfläche 40 nach außen hin umgibt. Dadurch ist zwischen der Belüftungsfläche 40 und äußeren Wandung 41 der Unterraum 42 gebildet, der im Querschnitt eine kreisbogenartige Gestalt aufweist. Wie man aus dem Vergleich der Fig. 2a und 2b erkennt, liegt die Belüftungsfläche 40 in der Flucht des Förderrohrs ohne Belüftungsfläche, so daß ein nahezu kantenloser Übergang zwischen den Abschnitten mit und ohne Belüftungsfläche 40 entsteht. Durch die fluchtende Ausführung wird eine Störung des Gasstroms vermieden. Am tiefsten Punkt der Außenwandung 41 ist der Zufuhranschluß 43 angeordnet. An ihm ist über eine Fluidisiergasleitung 44 mit einem Regulierventil 45 eine Fluidisiergasquelle angeschlossen, bei der es sich in dem Ausführungsbeispiel um die Gasquelle 1 handelt. Es können aber auch unabhängige Quellen für das Treibgas und das Fluidisiergas vorgesehen sein. Durch das Einstellventil 21 und das Regulierventil 45 können die jeweiligen Gasströme unabhängig voneinander eingestellt werden. Falls wie in dem dargestellten Ausführungsbeispiel mehrere Regulierventile 45 vorgesehen sind, sind sie vorteilhafterweise unabhängig voneinander einstellbar. Zweckmäßigerweise ist dazu der Unterraum 42 mit einer Trennwand 46 versehen, die so angeordnet ist, daß beidseitig jeweils sich ein Zufuhranschluß 43 mit Regulierventil 45 befindet.

Die Vorrichtung wird wie folgt betrieben: Über das Gebläse 1 und die Zufuhrleitung 2 wird dem Förderrohr 3 Treibgas zugeführt. Das Treibgas strömt längs dem Förderpfad 33 axial durch das Förderrohr 3 durch die Abschnitte 30 bis 35 hindurch. In dem Abschnitt 32 wird über die Schüttgutaufgabeeinrichtungen 5 das Schüttgut 6 von oben in das Förderrohr 3 gegeben. Über die Zuleitung 44, das Regulierventil 45 und den Zufuhranschluß 43 strömt Fluidisiergas in den Unterraum 42 des fluidisierenden Rohrsegments 4 ein und strömt schließlich durch die Belüftungsfläche 40 quer zum Förderpfad 33 in das Förderrohr 3 ein. Das Fluidisiergas trifft auf das zugeführte Schüttgut 6 und erzeugt in diesem eine Wirbelschicht, d. h. es bewirkt eine Fluidisierung des Schüttguts. Das somit fluidisierte Schüttgut kann von dem in Richtung des Förderpfads 33 strömenden Treibgas wie eine Flüssigkeit, d. h. mit nur geringer innerer Reibung, aufgenommen und bewegt werden.

Bei einer bewährten Ausführungsform hat es sich als günstig ergeben, die Gasmenge des Fluidisiergases so einzustellen, daß sie mindestens das dreifache der Lockerungsgeschwindigkeit des jeweiligen Feststoffs des Schüttguts beträgt. Mit den erfindungsgemäßen fluidisierbaren Rohrsegmenten kann bei einer Versuchsfördervorrichtung, die bei einem Förderrohrdurchmesser D_{R} von 100 mm und einer Förderentfernung von 30 m Flugasche als Schüttgut transportiert, erreicht werden, daß sowohl in der Betriebsart Saugförderung wie auch in der Betriebsart Druckförderung der Gesamtfördergasbedarf gegenüber einer herkömmlichen Rohrförderung deutlich reduziert werden kann. Unter dem Gesamtfördergasbedarf wird hierbei die Summe des Bedarfs an Treibgas und an Fluidisiergas verstanden. Ferner kann die Treibgasanfangsgeschwindigkeit verglichen mit den aus dem Stand der Technik bekannten Rohrfördervorrichtungen abgesenkt werden, und zwar insbesondere im Saugbetrieb. Die Gasanfangsgeschwindigkeit des Treibgases konnte von Werten wesentlich über 10 m pro Sekunde bei herkömmlichen Rohrfördervorrichtungen auf eine Geschwindigkeit von etwa 4 m pro Sekunde reduziert werden. Dabei ergab sich ein stabiler und zugleich pulsationsfreier Betrieb. Darüber hinaus konnte das fluidisierende Rohrsegment mit der Schüttgutaufgabeeinrichtung horizontal oder aufwärts geneigt angeordnet werden. Im Versuch wurden Steigungen von 0° bis etwa 30° überwunden.

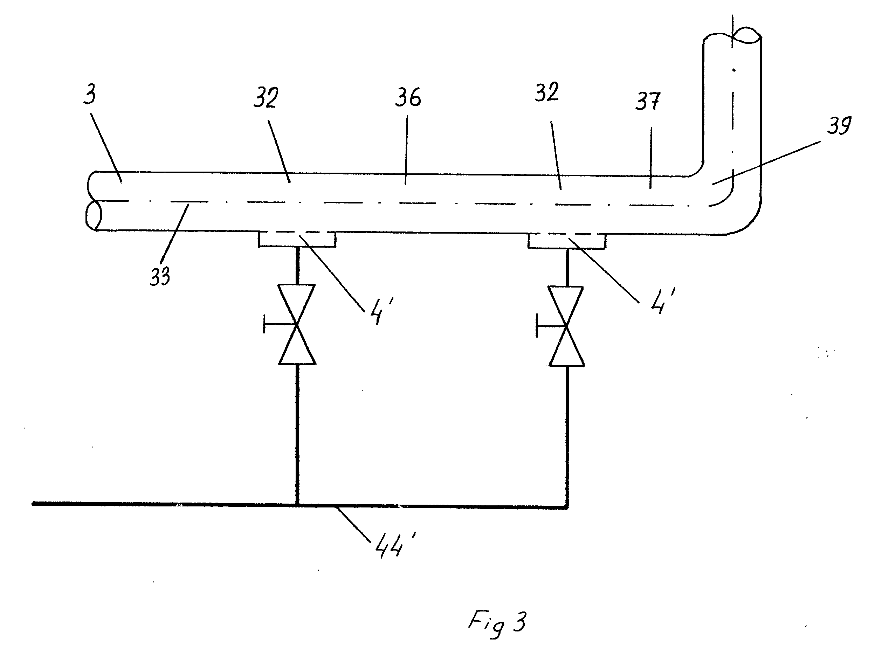

In Fig. 3 ist das Förderrohr 3 mit langen geraden Abschnitten 36, 37 dargestellt, die zu einem Krümmer 39 als Umlenkelement führen. Bei herkömmlichen Rohrfördereinrichtungen besteht eine Tendenz, daß das Schüttgut teilweise aus dem Treibgasstrom ausfällt, so daß sich lokal Schüttgutansammlungen bilden. Dies kann zur Bildung von Strähnen und zur schlagartigen Pfropfenbildung führen. Um dem entgegenzuwirken, werden in langen horizontalen Geradstrecken an Stellen, die durch Messung an der jeweiligen Fördervorrichtung leicht bestimmt werden können und an denen häufig Schüttgutansammlungen auftreten, fluidisierende Rohrsegmente 4' eingesetzt. Durch Zufuhr von Fluidisiergas über die Zuleitung 44' an die fluidisierenden Rohrsegmente 4' wird an den Stellen, an denen das Schüttgut zur Ansammlung tendiert, Fluidisiergas quer zum Förderweg 33 in das Förderrohr 3 eingeblasen. Dadurch werden eventuelle Ansammlungen von Schüttgut fluidisiert und von dem Treibgas weiterbewegt, bevor es sich in einer kritischen Menge ablagern kann. Der Gefahr der Pfropfenbildung und den daraus resultierenden Risiken von Verstopfung der Leitung und Druckschlägen, die zu Beschädigungen und Zerstörungen des Förderrohrs 3 führen kann, wird damit entgegengewirkt.

Die Bestimmung der Stellen mit Tendenz zu Schüttgutansammlungen kann vorzugsweise durch Bestimmen des Gashaltevermögens erfolgen.

## Patentansprüche

1. Vorrichtung zum pneumatischen Fördern von Schüttgut mit einem Förderrohr (3), das einen Förderpfad (33) für das Schüttgut (6) definiert, und einer Treibgasquelle (1), die an das Förderrohr (3) angeschlossen ist und zum Zuführen von Treibgas in Richtung des Förderpfads (33) ausgebildet ist, **dadurch gekennzeichnet, daß** das Förderrohr (3) abschnittsweise ein fluidisierendes Rohrsegment (4) aufweist.

2. Vorrichtung nach Anspruch 1, **dadurch gekennzeichnet, daß** das fluidisierende Rohrsegment (4) im Bereich einer Schüttgutaufgabeeinrichtung (5) angeordnet ist.

3. Vorrichtung nach Anspruch 1 oder 2, **dadurch gekennzeichnet, daß** das fluidisierende Rohrsegment (4') an einer Pfropfstelle angeordnet ist.

4. Vorrichtung nach Anspruch 3, **dadurch gekennzeichnet, daß** das fluidisierende Rohrsegment (4) einen Belüftungsboden (40, 41) mit einer Fluidisiergaszuführung (43) aufweist.

5. Vorrichtung nach einem der vorhergehenden Ansprüche, **dadurch gekennzeichnet, daß** das fluidisierende Rohrsegment (4) horizontal oder aufwärts geneigt angeordnet ist.

6. Vorrichtung nach einem der vorhergehenden Ansprüche, **dadurch gekennzeichnet, daß** der Neigungswinkel zwischen 0° und +45°, vorzugsweise bis +30°, beträgt.

7. Vorrichtung nach einem der vorhergehenden Ansprüche, **dadurch gekennzeichnet, daß** das fluidisierende Rohrsegment (4) beabstandet von einem Umlenkelement (39) oder einer Erweiterung des Förderrohrs (3) angeordnet ist.

8. Verfahren zum pneumatischen Fördern von Schüttgut in einem Förderrohr (3) entlang eines Förderpfads (33), mit den Schritten:
- Zuführen von Treibgas in das Förderrohr (3), so daß ein längs des Förderpfads (33) strömender Treibgasstrom entsteht,
- Aufgeben von Schüttgut (6) in den Treibgasstrom im Förderrohr (3),
**gekennzeichnet durch**
- abschnittsweises Zuführen von Fluidisiergas quer zum Förderpfad (33) in das Förderrohr (3) derart, daß das Schüttgut (6) fluidisiert wird.

9. Verfahren nach Anspruch 8, **gekennzeichnet durch** Einstellen der Gasgeschwindigkeit und/oder Menge des Fluidisiergasstroms derart, daß das Schüttgut fluidisiert ist.

10. Verfahren nach Anspruch 8 oder 9, **gekennzeichnet durch** Abteilen des Fluidisiergases von dem Treibgasstrom.
